# EUROPÄISCHE PATENTSCHRIFT

(11) **EP 3 426 808 B1**
(45) Veröffentlichungstag und Bekanntmachung des Hinweises auf die Patenterteilung: **20.01.2021**
(21) Anmeldenummer: 17710845.3
(22) Anmeldetag: 03.03.2017
(51) Int. Cl.: C21D 9/42, C21D 9/46, C21D 1/10

(54) **VERWENDUNG EINES WÄRMEBEHANDELTEN FLACHPRODUKTES AUS STAHL**
APPLICATION OF THERMALLY TREATED FLAT STEEL PRODUCT
UTILISATION D'UN PRODUIT PLAT EN ACIER TRAITÉ THERMIQUE

(30) Priorität: 10.03.2016 DE 102016203969
(43) Veröffentlichungstag der Anmeldung: 16.01.2019
(73) Patentinhaber: ThyssenKrupp Steel Europe AG, 47166 Duisburg (DE); thyssenkrupp AG, 45143 Essen (DE)
(72) Erfinder: OHSE, Peter, 47055 Duisburg (DE); WISCHMANN, Stefan, 10437 Berlin (DE); PLHA, Jens, 40468 Düsseldorf (DE); KRENKE, Thorsten, 47178 Duisburg (DE); KRANZ, Stefan, 47167 Duisburg (DE)
(74) Vertreter: ThyssenKrupp Steel Europe AG
(86) Internationale Anmeldenummer: PCT/EP2017/054985
(87) Internationale Veröffentlichungsnummer: WO 2017/153265

(56) Entgegenhaltungen:
- EP-A1- 1 690 606
- EP-A1- 1 935 995
- EP-A1- 2 861 773
- WO-A1-2009/045146
- WO-A1-2012/002863
- US-A- 3 751 018
- US-A1- 2007 079 912
- US-A1- 2015 147 545
- US-B2- 7 459 041
- INGHAM D W ET AL: "THE SUBMERGED INDUCTION HARDENING OF GEARS", GEAR TECHNOLOGY, RANDALL PUBLISHING CO. ELK GROVE, ILLINOIS, US, vol. 18, no. 2, 1 March 2001 (2001-03-01), pages 28-31, 34, XP001073044, ISSN: 0743-6858

## Beschreibung

Die Erfindung betrifft eine Verwendung eines wärmebehandelten Flachproduktes aus Stahl.

Zum ballistischen Schutz von zivilen wie auch militärischen Fahrzeugen ist der Einsatz von Stählen mit hohen Härten und Festigkeiten bekannt, welche als Sicherheitsstähle bezeichnet werden. Derartige Stähle weisen in der Regel hohe Dicken auf, um die Energie eines auftreffenden Gegenstandes (Projektil, Splitter) und/oder einer Druckwelle vollständig abbauen zu können und ein Durchdringen des Materials im Wesentlichen zu verhindern. Um das Gewicht zu reduzieren und das Eigenschaftsprofil insbesondere über die Dicke der für ballistische Zwecke eingesetzten Stähle zu optimieren, eignen sich Mehrlagenstähle, welche aus mindestens zwei Stahllagen zusammengesetzt sind und mindestens eine Kombination aus einem harten und einem zweiten Stahl mit hoher Duktilität umfassen, wobei der harte Stahl den auftreffenden Gegenstand zerstören und der duktilere Stahl die entstandene Energie des Aufpralls absorbieren soll. Im Stand der Technik sind unterschiedliche Verfahren zum Herstellen gattungsgemäßer Mehrlagenstähle bekannt, welche plattiert werden (z. B. DE 21 42 360 A), beispielsweise mittels Sprengplattieren (z. B. US 6 360 936, DE 692 02 131 T2), welches sehr kostenintensiv ist, mittels Warmwalzplattieren (z. B. EP 2 123 447 A1) oder mittels Walzplattieren unter Verwendung einer Wärmequelle (z. B. DE 44 29 913 C1). Alle Plattierungsverfahren haben gemeinsam, dass die zu plattierenden Halbzeuge an ihren Anbindungsflächen aufwendig und damit kostenintensiv bearbeitet werden müssen (siehe z. B. DE 43 44 879 C2, DE 10 2005 006 606 B3), um eine sichere Verbindung der einzelnen Lagen miteinander zu gewährleisten, so dass im Belastungsfall kein Versagen zwischen den Lagen auftreten kann, welches zu einem mangelnden ballistischen Schutz führen würde. Auch bei der Weiterverarbeitung können Probleme zwischen den Lagen der unterschiedlichen Stähle auftreten, welche sich beispielsweise in Form von Spannungsrissen insbesondere unter Belastung bemerkbar machen können, welche aufgrund der sprunghaften Eigenschaftsänderungen an den Grenz-/Kontaktflächen zwischen den Lagen resultieren können. Problematisch können sich aber auch Diffusionsvorgänge insbesondere von interstitiell gelösten Atomen, wie beispielsweise Kohlenstoff oder Stickstoff, gestalten, die während der sukzessiven Wärmebehandlungsschritte, beispielsweise beim Warmwalzplattieren, in benachbarte Metalllagen eindringen und die Werkstoffeigenschaften dieser Lagen negativ beeinflussen können. Die beispielhaft, genannten Plattierungsverfahren eignen sich auch zur Herstellung anderer Bauteile, die nicht nur für ballistische Zwecke ausgelegt sind, sondern beispielsweise für Bauteile in Bereichen, die hohen abrasiven Einflüssen ausgesetzt sind und somit hohe Verschleißschutz-Eigenschaften erfordern (vgl. z. B. DE 10 2005 006 606 B3).

Ein Verfahren zur Herstellung eines wärmebehandelten Werkstücks ist beispielhaft in der WO 2012/002863 A1 beschrieben.

Die Verwendung eines wärmebehandelten Flachproduktes aus Stahl als Teil oder Komponente einer Panzerung oder als Teil oder Komponente mit Verschleißschutz-Eigenschaften, insbesondere gegen Einwirkung von abrasiven Kräften, ist aus EP2861773 A1 bekannt.

In Bezug auf den Stand der Technik besteht weiteres Verbesserungspotential.

Der Erfindung lag die Aufgabe zugrunde, mit einem Verfahren zur Wärmebehandlung ein Flachprodukt aus Stahl bereitzustellen, welches die Nachteile des bekannten Standes der Technik überwindet, wirtschaftlich und einfach insbesondere mit vergleichbaren Ergebnissen umgesetzt werden kann, eine Verwendung eines wärmebehandelten Flachproduktes anzugeben.

Das Verfahren zur Wärmebehandlung eines Flachproduktes aus Stahl umfasst folgende Schritte:
- Bereitstellen eines Flachproduktes aus Stahl mit einem Gefüge mit einer ersten Härte,
- zumindest bereichsweise Erwärmen des Flachproduktes auf Austenitisierungstemperatur,
- Abkühlen des zumindest bereichsweise erwärmten Flachproduktes, so dass sich zumindest bereichsweise ein Gefüge mit einer zweiten Härte im Flachprodukt einstellt, welches eine im Vergleich zu dem Gefüge mit der ersten Härte höhere Härte aufweist, wobei das Erwärmen und das Abkühlen des Flachproduktes derart aufeinander abgestimmt werden, dass sich das Gefüge mit der zweiten Härte abschnittsweise über die Dicke des Flachproduktes ausbildet und zumindest in einem Abschnitt über die Dicke des Flachproduktes das Gefüge mit der ersten Härte bestehen bleibt.

Die Erfinder haben festgestellt, dass durch eine gezielte Wärmebehandlung eines monolithischen Flachproduktes aus Stahl unterschiedliche Eigenschaften über die Dicke des Flachproduktes eingestellt werden können, welche bisher nur durch einen Mehrlagenaufbau bereitgestellt werden konnte. Durch das Bereitstellen des Verfahrens können auch keine Probleme hinsichtlich unerwünschter Diffusionsvorgänge auftreten und aufwendige und kostenintensive Vorbehandlung- und Verfahrensschritte entfallen. Dadurch kann insbesondere gezielt ein variables Härteprofil über die Dicke eines monolithischen Stahlwerkstoffes eingestellt werden.

Unter Gefüge mit einer ersten Härte ist im Wesentlichen das Ausgangsgefüge des Flachproduktes im Anlieferungszustand vor der Wärmebehandlung zu verstehen. Unter Härte im Gefüge mit der ersten Härte oder zweiten Härte, etc. sind Härte-Mittelwerte über die jeweiligen Abschnitte zu verstehen. Unter Austenitisierungstemperatur ist eine Temperatur von mindestens A_{c1} (Austenit-Starttemperatur), besonders bevorzugt mindestens A_{c3} (Austenit-Endtemperatur) zu verstehen Die angegebenen TemperaturWerte A_{c1}, A_{c3} und sowie Martensit-Starttemperatur M_{S} sind werkstoffabhängig und lassen sich anhand der entsprechenden Legierungszusammensetzung mit guter Genauigkeit abschätzen.

Gemäß einer ersten Ausführung des Verfahrens erfolgt das Erwärmen zumindest einseitig unter Verwendung mindestens einer Wärmequelle, wobei das Gefüge mit der zweiten Härte zumindest in einem Randabschnitt des Flachproduktes eingestellt wird. Über die einseitige Erwärmung kann gezielt Einfluss auf den Wärmeeintrag in das Flachprodukt genommen werden. Insbesondere kann dadurch die Tiefe der Wärmebehandlung innerhalb des Flachproduktes abschnittsweise gesteuert werden. Um eine vollständige Erwärmung der gesamten Dicke des Flachproduktes respektive ein vollständiges Durchhärten durch Abkühlen nach dem Erwärmen zu vermeiden, kann das Flachprodukt auf der der Wärmequelle abgewandten Seite beispielsweise aktiv mittels geeigneten Mitteln gekühlt werden, um zu verhindern, dass zumindest der Randabschnitt des Flachproduktes auf der der Wärmequelle abgewandten Seite im Wesentlichen nicht negativ beeinflusst wird. Dadurch lässt sich zumindest in einem Abschnitt über die Dicke des Flachproduktes eine Änderung des Gefüges im Wesentlichen unterdrücken und das Gefüge mit der ersten Härte bleibt im Wesentlichen erhalten.

Gemäß einer alternativen Ausführung des Verfahrens erfolgt das Erwärmen beidseitig unter Verwendung jeweils mindestens einer Wärmequelle, wobei das Gefüge mit der zweiten Härte in beiden Randabschnitten des Stahlflachproduktes eingestellt wird. Über die beidseitige Erwärmung kann gezielt Einfluss auf den Wärmeeintrag in das Flachprodukt von beiden Seiten genommen werden. Insbesondere kann dadurch die Tiefe der Wärmebehandlung innerhalb des Flachproduktes abschnittsweise gesteuert werden, wobei eine vollständige Durcherwärmung des Flachproduktes, insbesondere der Kernabschnitt verhindert werden soll. Durch die beidseitige Erwärmung mit anschließendem Abkühlen lassen sich harte Randabschnitte mit einem duktilen Kernabschnitt einstellen. Vorteilhaft lässt sich je nach Tiefe der Wärmebehandlung ein symmetrisches oder asymmetrisches Härteprofil über die Dicke des Flachproduktes einstellen. Die harten Randabschnitte müssen nicht die gleiche Härte aufweisen, sondern können auch unterschiedlich eingestellt werden, so dass auf einer Seite des Flachproduktes ein Randabschnitt mit einem Gefüge mit einer zweiten Härte und auf der anderen Seite des Flachproduktes ein Randabschnitt mit einem Gefüge mit einer dritten Härte eingestellt werden, wobei das Gefüge mit der dritten Härte eine geringere Härte als das Gefüge mit der zweiten Härte jedoch eine höhere Härte als das Gefüge mit der ersten Härte aufweist.

Bevorzugt wird gemäß einer weiteren Ausführung des Verfahrens mindestens ein Induktor als Wärmequelle verwendet. Induktive Wärmequellen sind einfach und wirtschaftlich zu betreiben und können zumindest bereichsweise Werkstücke erwärmen, insbesondere kann die Wärmebehandlungstiefe gezielt und relativ einfach gesteuert werden. Der Induktor wird beispielsweise mit einer Frequenz zwischen 10 Hz und 1 MHz, insbesondere zwischen 100 Hz und 400 kHz betrieben. Der Abstand zwischen Induktor und Flachprodukt beträgt beispielsweise zwischen 1 und 10 mm, insbesondere zwischen 2 und 5 mm zum Flachprodukt. Der sogenannte Koppelabstand bestimmt auch neben der Frequenz die Eindringtiefe. Die optimale Einstellung hinsichtlich Arbeitsfrequenz, Abstand und Wärmebehandlungstiefe hängt von dem herzustellenden Produkt ab und kann relativ einfach mittels Simulation und/oder "Trial and Error-Versuchen" ermittelt werden.

Gemäß einer weiteren Ausführung des Verfahrens wird zumindest ein Randabschnitt des Flachproduktes während der Erwärmung auf mindestens eine Temperatur von mindestens A_{c3} + 20 K erwärmt und bei dieser Temperatur für mindestens 1 s bis maximal 60 s gehalten. Bei dieser Temperatur und Haltedauer kann sichergestellt werden, dass der zu härtende Bereich innerhalb des Flachproduktes auch vollständig austenitisiert wird, d. h. dass das Gefüge zumindest im Randbereich vollständig in Austenit umgewandelt wird. Je nach Wärmequelle kann die Haltedauer verringert werden, beispielsweise bei Verwendung eines Induktors auf maximal 10 s. Eine Temperatur von mehr als 1100 °C sollte nicht überschritten werden, um eine Kornvergröberung im temperierten Abschnitt zu verhindern, wodurch die Eigenschaft negativ beeinflusst werden könnte.

Gemäß einer weiteren Ausgestaltung des Verfahrens erfolgt das Abkühlen unter Verwendung geeigneter Mittel, vorzugsweise wird das Flachprodukt mit Wasser abgeschreckt, um den zuvor austenitisierten Bereich in ein Gefüge mit höherer Härte umzuwandeln, welches beispielsweise einem im Wesentlichen martensitischen oder martensit-bainitischen Gefüge entspricht, wobei das Abschrecken oberhalb einer werkstoffabhängigen kritischen Abkühlgeschwindigkeit zu erfolgen hat, beispielsweise bei einer Abkühlgeschwindigkeit > 30 K/s, um eine hohe Härte zu erzielen.

Gemäß einer weiteren Ausgestaltung des Verfahrens wird zumindest zwischen einem Randabschnitt mit einem Gefüge mit der zweiten Härte und/oder dritten Härte und dem Abschnitt mit dem Gefüge mit der ersten Härte ein Anlassabschnitt mit einem Gefüge mit einer vierten Härte eingestellt, welcher insbesondere eine geringere Härte als der Abschnitt mit dem Gefüge mit der ersten Härte aufweist. Der Anlassabschnitt ermöglicht mit seiner geringeren Härte und höheren Duktilität im Vergleich zu den benachbarten Abschnitten eine Verbesserung hinsichtlich der ballistischen Eigenschaften und Weiterverarbeitung. Das Absorptionsvermögen eines auftreffenden Gegenstandes und/oder die Umformeignung für eine Weiterverarbeitung können durch das Vorsehen eines Anlassbereiches weiter erhöht werden.

Um positiv Einfluss auf die Rissempfindlichkeit insbesondere an der Oberfläche des wärmebehandelten Bereiches an dem Flachprodukt zu nehmen respektive diese zu reduzieren, wird gemäß einer weiteren Ausgestaltung des Verfahrens zumindest in einem der Randabschnitte mit einem Gefüge mit einer zweiten Härte und/oder dritten Härte eine entkohlte Randschicht eingestellt. Die entkohlte Randschicht kann beispielsweise während der Erwärmung durch eine entsprechende Atmosphäre, insbesondere feuchter Luft und/oder durch ein verzögertes Abkühlen nach dem Austenitisieren erst nach Unterschreiten einer Temperatur von 700°C eingestellt werden. Alternativ kann die Rissempfindlichkeit an der Oberfläche durch Einstellen einer Randschicht mit einem Gefüge mit einer fünften Härte, welche eine im Vergleich zum Randabschnitt mit dem Gefüge mit der zweiten und/oder dritten Härte geringere Härte insbesondere ohne Randschichtentkohlung aufweist. Diese Einstellung erfolgt durch ein verzögertes Abkühlen, wobei ein Abschrecken erst nach Unterschreiten einer Temperatur zumindest in der Randschicht, die der M_{S}-Temperatur entspricht, erfolgt.

Gemäß einer weiteren Ausgestaltung des Verfahrens wird ein Flachprodukt aus Stahl verwendet, welches ferromagnetisch ist, welcher vorzugsweise induktiv wärmebehandelt werden kann. Insbesondere kann das Flachprodukt aus Stahl herstellungsbedingt im walzharten Zustand, d. h. dass an dem Flachprodukt nach dem letzten Walzstich keine Wärmebehandlung, insbesondere kein Rekristallisationsglühen durchgeführt wurde, bereitgestellt werden. Alternativ oder kumulativ kann das Flachprodukt herstellungsbedingt bereits eine homogene Ausgangshärte von beispielsweise mindestens 300 HV 10 aufweisen. HV ist die Vickershärte und die Härteprüfung ist in der DIN EN ISO 6507-1:2006-03 geregelt. Vorzugsweise besteht das Stahl-Flachprodukt aus folgenden Legierungsbestandteilen in Gew.-%:

| | |
|---|---|
| 0,15 | <= C <= 0,6, |
| 0,1 | <= Si <= 1,2, |
| 0,3 | <= Mn <= 1,8, |
| 0,1 | <= Cr <= 1,8, |
| 0,05 | <= Mo <= 0,6, |
| 0,05 | <= Ni <= 3,0, |
| 0,0005 | <= B <= 0,01, |
| Al | <= 0,15, |
| Ti | <= 0,04, |
| P | <= 0,04, |
| S | <= 0,03, |
| N | <= 0,03, |

Rest Eisen und unvermeidbare Verunreinigungen. Vorzugsweise ist das Flachprodukt ein Grobblech.

Um ein Endprodukt zu erzeugen, welches nicht flach ausgeführt sein soll, wird gemäß einer weiteren Ausführung des Verfahrens das Flachprodukt umgeformt und/oder beschnitten. Bei Bedarf kann das Flachprodukt vor und/oder nach seiner Verarbeitung beispielsweise zu einem Endprodukt einer weiteren Wärmebehandlung unterzogen werden.

Die Erfindung betrifft eine Verwendung eines wärmebehandelten Flachproduktes nach Anspruch 1.

Gemäß der erfindungsgemäßen Verwendung ist das Gefüge mit der zweiten Härte in einem Randabschnitt des Flachprodukts ausgebildet, wobei die Schichtdicke des Randabschnittes mindestens 5% bis maximal 80% der Gesamtdicke des Flachprodukts betragen kann und die restliche Dicke des Flachproduktes aus dem Abschnitt mit dem Gefüge mit der ersten Härte besteht. Durch das asymmetrische Härteprofil über die Dicke des Flachproduktes wird eine "härtere" und eine "duktilere" Seite je nach Anwendung zur Verfügung gestellt.

Das Gefüge ist mit der zweiten Härte in beiden Randabschnitten des Flachprodukts ausgebildet oder es sind auf einer Seite des Flachproduktes ein Randabschnitt mit einem Gefüge mit einer zweiten Härte und auf der anderen Seite des Flachproduktes ein Randabschnitt mit einem Gefüge mit einer dritten Härte ausgebildet, wobei das Gefüge mit der dritten Härte eine geringere Härte als das Gefüge mit der zweiten Härte jedoch eine höhere Härte als das Gefüge mit der ersten Härte aufweist, wobei die Schichtdicke des Randabschnittes jeweils zwischen mindestens 5% und maximal 45 % der Gesamtdicke des Flachprodukts variieren kann und die restliche Dicke durch den Abschnitt mit dem Gefüge mit der ersten Härte gebildet ist. Je nach Anwendung kann individuell ein asymmetrisches oder auch symmetrisches Härteprofil, wenn beide Randabschnitte die gleiche Abmessung aufweisen, in einem Flachprodukt mit zwei "harten" bzw. "härteren" Seiten und einem "duktilen" bzw. "duktileren" Kern zur Verfügung gestellt werden.

Das Flachprodukt weist eine Härtedifferenz zwischen dem mindestens einen Randabschnitt mit dem Gefüge mit der zweiten Härte und/oder dritten Härte und dem Abschnitt mit dem Gefüge mit der ersten Härte von mindestens 100 HV10, insbesondere mindestens 150 HV10 auf. Im Ergebnis kann ein optimal für jede beliebige Verwendung angepasstes Eigenschaftsprofil in einem monolithischen Flachprodukt bereitgestellt werden, welches bisher nur durch einen Mehrlagenaufbau möglich war.

Das Flachprodukt weist zumindest zwischen einem Randabschnitt mit dem Gefüge mit der zweiten Härte und/oder dritten Härte und dem Abschnitt mit dem Gefüge mit der ersten Härte einen Anlassabschnitt mit einem Gefüge mit einer vierten Härte auf, welcher eine im Vergleich zum Abschnitt mit dem Gefüge mit der ersten Härte um mindestens 10 HV10, insbesondere mindestens 20 HV10 geringere Härte hat.

Das Flachprodukt weist zumindest in einem der Randabschnitte eine entkohlte Randschicht auf oder weist eine Randschicht mit einem Gefüge mit einer fünften Härte auf, welche eine im Vergleich zum Randabschnitt geringere Härte hat. Die entkohlte Randschicht oder die Randschicht mit dem Gefüge mit der fünften Härte können bis zu einer Dicke von maximal 10%, insbesondere maximal 5% bezogen auf die Gesamtdicke des Flachproduktes vorliegen.

Insbesondere hat das Flachprodukt eine Gesamtdicke zwischen 3 und 80 mm, insbesondere zwischen 6 und 20 mm. Vorzugsweise ist das Stahl-Flachprodukt aus einem Grobblech gebildet.

Im Folgenden wird die Erfindung anhand einer Ausführungsbeispiele darstellenden Zeichnung näher erläutert. Gleiche Teile sind mit gleichen Bezugszeichen versehen. Es zeigt
- Figur 1a): ein erstes Ausführungsbeispiel zur Wärmebehandlung eines Flachproduktes in einer schematischen Ansicht,
- Figur 1b): eine Darstellung des Härteverlaufs über die Dicke des nach dem ersten Ausführungsbeispiel wärmebehandelten Flachproduktes,
- Figur 2a): ein zweites Ausführungsbeispiel zur Wärmebehandlung eines Flachproduktes in einer schematischen Ansicht,
- Figur 2b): eine Darstellung des Härteverlaufs über die Dicke des nach dem zweiten Ausführungsbeispiel wärmebehandelten Flachproduktes,
- Figur 3a): ein schematischer Schnitt durch ein nach einem dritten Ausführungsbeispiel wärmebehandelten Flachproduktes,
- Figur 3b): eine Darstellung des Härteverlaufs über die Dicke des in Figur 3a) wärmebehandelten Flachproduktes,
- Figur 4a): ein schematischer Schnitt durch ein nach einem vierten Ausführungsbeispiel wärmebehandelten Flachproduktes,
- Figur 4b): eine Darstellung des Härteverlaufs über die Dicke des in Figur 4a) wärmebehandelten Flachproduktes,
- Figur 5a): ein schematischer Schnitt durch ein nach einem fünften Ausführungsbeispiel wärmebehandelten Flachproduktes,
- Figur 5b): eine Darstellung des Härteverlaufs über die Dicke des in Figur 5a) wärmebehandelten Flachproduktes,
- Figur 6a): ein schematischer Schnitt durch ein nach einem sechsten Ausführungsbeispiel wärmebehandelten Flachproduktes,
- Figur 6b): eine Darstellung des Härteverlaufs über die Dicke des in Figur 6a) wärmebehandelten Flachproduktes,

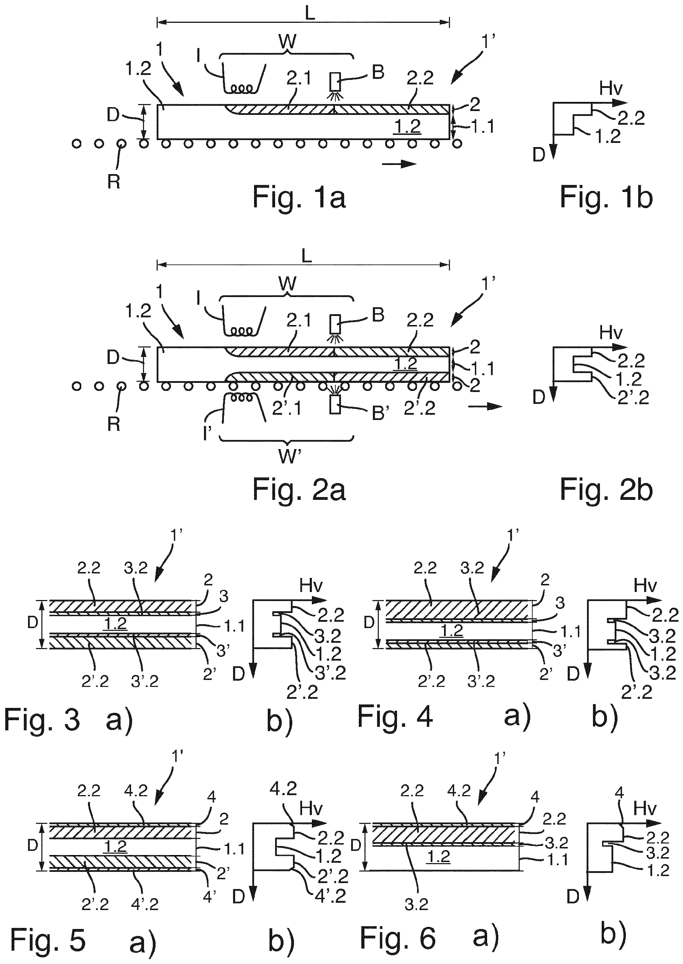

In Figur 1a) ist ein erstes Ausführungsbeispiel zur Wärmebehandlung eines Flachproduktes (1) in einer schematischen Ansicht dargestellt. Das Flachprodukt (1) besteht aus einem ferromagnetischen Stahl mit einem im Wesentlichen homogenen Gefüge mit einer ersten Härte (1.1), beispielsweise aus einem vergütbaren Stahlwerkstoff mit einem ferrit-perlitisches Gefüge mit einer Dicke zwischen 3 und 80 mm, vorzugsweise zwischen 6 und 20 mm, welcher vorzugsweise aus einem Grobblech gebildet ist. Das Flachprodukt (1) weist eine Länge (L), eine Breite, welche aufgrund der Schnittdarstellung hier nicht dargestellt ist und beispielsweise von der Abmessung her um ein Vielfaches kleiner ist als die Länge (L), und eine Dicke bzw. Gesamtdicke (D) auf.

Das Flachprodukt (1) wird vorzugsweise in einem kontinuierlichen Prozess zumindest bereichsweise, vorzugsweise über die gesamte Breite des Flachproduktes (1) und zumindest bereichsweise, vorzugsweise über die gesamte Länge (L) des Flachproduktes (1) wärmebehandelt. Wie in Figur 1a) dargestellt, befindet sich das Flachprodukt (1) beispielsweise auf einem Rollengang (R) und wird in Richtung einer Wärmebehandlungseinheit (W) bewegt, symbolisiert durch den dargestellten Pfeil. Die Wärmebehandlungseinheit (W) umfasst mindestens eine Wärmequelle zum einseitigen Erwärmen des Flachproduktes (1), wobei als Wärmequelle vorzugsweise mindestens ein Induktor (I) verwendet wird, und mindestens eine Abkühleinheit zum Abkühlen des erwärmten Flachproduktes (1), welche vorzugsweise mindestens eine Wasserdusche bzw. -brause (B) umfasst. Über den Induktor (I) wird das Flachprodukt (1) während der Erwärmung auf mindestens eine Temperatur von mindestens A_{c3} + 20 K erwärmt und bei dieser Temperatur für mindestens 1 s bis maximal 60 s gehalten, vorzugsweise maximal 10 s, wobei der zu härtende Bereich (2.1) innerhalb des Flachproduktes (1) vollständig austenitisiert wird. Aufgrund der Wärmeleitung innerhalb des Flachproduktes (1) muss sichergestellt sein, dass der zu härtende Bereich (2.1) die gewünschte Enddicke nicht überschreitet. Abhängig von der Wärmebehandlungstiefe wird der austenitisierte, zu härtende Bereich (2.1) über eine Wasserbrause (B) abgeschreckt, wobei die Abkühlgeschwindigkeit > 30 K/s gewählt wird, um ein Härtegefüge, beispielsweise ein martenisitisches oder ein martensit-bainitisches Gefüge (2.2) im Randabschnitt (2) einzustellen. Dabei werden das Erwärmen (I) und das Abkühlen (B) des Flachproduktes (1) derart aufeinander abgestimmt, dass sich ein Gefüge mit einer zweiten Härte (2.2) abschnittsweise über die Dicke (D) des Flachproduktes (1'), nämlich im Randabschnitt (2) ausbildet und zumindest in einem Abschnitt (1.1) über die Dicke (D) des Flachproduktes (1') das Gefüge mit der ersten Härte (1.2) bestehen bleibt, d. h., dass der Abschnitt (1.1) nicht bzw. nicht wesentlich von der Wärmebehandlung negativ beeinflusst wird. Alternativ und hier nicht dargestellt, kann die Wärmebehandlungseinheit und/oder ihre Einheiten einzeln über das Flachprodukt verfahrbar angeordnet sein. Das Härteprofil über die Dicke des Flachproduktes (1') ist in Figur 1b) dargestellt und zeigt, dass der Randabschnitt (2) ein Gefüge mit einer zweiten Härte (2.2) aufweist, welche höher ist als der Abschnitt (1.1) mit dem Gefüge mit der ersten Härte (1.2), wobei die Härtedifferenz vorzugsweise mindestens 100 HV10 beträgt.

In Figur 2a) ist ein zweites Ausführungsbeispiel zur Wärmebehandlung eines Flachproduktes (1) in einer schematischen Ansicht dargestellt. Um Wiederholungen zu vermeiden, werden nur die Unterschiede im Vergleich zum ersten Ausführungsbeispiel erläutert. Das auf einem Rollengang (R) dargestellte Flachprodukt (1) wird, wie in Figur 1a), in Richtung einer Wärmebehandlungseinheit (W) bewegt. Auf der der Wärmebehandlungseinheit (W) abgewandten Seite ist eine zweite Wärmebehandlungseinheit (W'), welche mindestens eine Wärmequelle, vorzugsweise mindestens einen Induktor (I') zum Erwärmen des Flachproduktes (1) und mindestens eine Abkühleinheit, vorzugsweise mindestens eine Wasserdusche bzw. -brause (B') zum Abkühlen des erwärmten Flachproduktes (1) umfasst. Das Erwärmen erfolgt beidseitig jeweils über mindestens einen Induktor (I, I'), welche sich vorzugsweise vollständig über die Breite des Flachproduktes erstrecken, um die gesamte Breite des Flachproduktes (1) zu erfassen und die zu härtenden Bereiche (2.1, 2'.1) innerhalb des Flachproduktes (1) vollständig zu austenitisieren. Abhängig von der Wärmebehandlungstiefe werden die austenitisierten, zu härtenden Bereiche (2.1, 2'1) mittels Wasserbrausen (B, B') abgeschreckt, wobei sich jeweils beispielsweise ein martenisitisches oder ein martensit-bainitisches Gefüge (2.2, 2'.2) in den Randabschnitten (2, 2') einstellen. Dabei werden das Erwärmen (I, I') und das Abkühlen (B, B') des Flachproduktes (1) derart aufeinander abgestimmt, dass sich ein Gefüge mit einer zweiten Härte (2.2, 2'.2) abschnittsweise über die Dicke (D) des Flachproduktes (1'), nämlich in den Randabschnitten (2) ausbildet und zumindest in einem Abschnitt (1.2) über die Dicke (D) des Flachproduktes (1') das Gefüge mit der ersten Härte (1.2) bestehen bleibt, d. h., dass der Abschnitt (1.1) nicht bzw. nicht wesentlich von der Wärmebehandlung negativ beeinflusst wird und dieser die Kernschicht (1.1) des Flachproduktes (1') bildet. Die beidseitige Wärmebehandlung erfolgt somit zeitgleich. Alternativ und hier nicht dargestellt können die Wärmebehandlungseinheiten auch versetzt zueinander angeordnet sein, wodurch die beiden Randabschnitte zeitlich versetzt erzeugt werden können. Das Härteprofil über die Dicke des Flachproduktes (1') ist in Figur 2b) dargestellt und zeigt, dass die Randabschnitte (2, 2') ein Gefüge mit einer zweiten Härte (2.2, 2'.2) aufweisen, welche höher sind als der Abschnitt (1.2) bzw. die Kernschicht mit dem Gefüge mit der ersten Härte (1.2). Vorzugsweise beträgt die Härtedifferenz mindestens 100 HV10.

In den Figuren 3a), 4a), 5a) und 6a) sind Schnitte durch hergestellte Flachprodukte (1') mit den in den Figuren 3b), 4b), 5b) und 6b) zugehörigen Härteprofilen über die jeweilige Dicke (D) gezeigt.

In einem schematischen Schnitt durch ein nach einem dritten Ausführungsbeispiel wärmebehandeltes Flachprodukt (1') sind ein Abschnitt (1.1), insbesondere eine Kernschicht mit einem Gefüge mit einer ersten Härte (1.2), zwei Randabschnitte (2, 2') mit einem Gefüge mit einer zweiten Härte (2.2, 2'.2) und zwischen den Randabschnitten (2, 2') und dem Abschnitt (1.1) jeweils ein Anlassabschnitt (3, 3') mit einem Gefüge mit einer vierten Härte (3.2, 3'.2) gezeigt. Die Anlassabschnitte (3, 3') haben jeweils eine im Vergleich zum Abschnitt (1.1) um mindestens 10 HV10 geringere Härte. Der Abschnitt (1.1) und die Randabschnitte (2, 2') entsprechen jeweils 30% der Gesamtdicke (D) des Flachproduktes (1') und jeweils weitere 5% nehmen die Anlassabschnitte (3, 3') ein, Figur 3a). Das symmetrische Härteprofil über die Dicke (D) ist in Figur 3b) dargestellt.

In einem schematischen Schnitt durch ein nach einem vierten Ausführungsbeispiel wärmebehandeltes Flachprodukt (1') besteht der Unterschied im Vergleich zum dritten Ausführungsbeispiel darin, dass der obere Randabschnitt (2) mit einem Gefüge mit einer zweiten Härte (2.2) dicker, welcher beispielsweise 50% der Gesamtdicke (D) entspricht, und der untere Randabschnitt (2') mit einem Gefüge mit einer zweiten Härte (2'.2) dünner, welcher beispielsweise 10% der Gesamtdicke(D) entspricht, ausgeführt ist, Figur 4a). Das asymmetrische Härteprofil über die Dicke (D) ist in Figur 4b) dargestellt.

In einem schematischen Schnitt durch ein nach einem fünften Ausführungsbeispiel wärmebehandeltes Flachprodukt (1') sind ein Abschnitt (1.1) insbesondere eine Kernschicht mit einem Gefüge mit einer ersten Härte (1.2) und zwei Randabschnitte (2, 2') mit einem Gefüge mit einer zweiten Härte (2.2, 2'.2) gezeigt. Das Flachprodukt (1') weist in beiden Randabschnitten (2, 2') jeweils eine entkohlte Randschicht auf oder weist jeweils eine Randschicht (4, 4') mit einem Gefüge mit einer fünften Härte (4.2, 4'.2) auf, welche eine im Vergleich zum Randabschnitt (2, 2') geringere Härte hat. Der Abschnitt (1.1) beträgt 30% und die Randabschnitte (2, 2') entsprechen jeweils 35% der Gesamtdicke (D) des Flachproduktes (1'), wobei die entkohlte Randschicht oder die Randschicht (4, 4') bis zu einer Dicke von maximal 5% bezogen auf die Gesamtdicke (D) des Flachproduktes (1') vorliegen kann, Figur 5a). Das symmetrische Härteprofil über die Dicke (D) ist in Figur 5b) dargestellt.

In einem schematischen Schnitt durch ein nach einem sechsten Ausführungsbeispiel wärmebehandeltes Flachprodukt (1') sind ein Abschnitt (1.1) mit einem Gefüge mit einer ersten Härte (1.2), ein Randabschnitt (2) mit einem Gefüge mit einer zweiten Härte (2.2) und zwischen dem Randabschnitt (2) und dem Abschnitt (1.1) ein Anlassabschnitt (3) mit einem Gefüge mit einer vierten Härte (3.2) gezeigt. Das Flachprodukt (1') weist im Randabschnitt (2) eine entkohlte Randschicht oder eine Randschicht (4) mit einem Gefüge mit einer fünften Härte (4.2) auf. Der Abschnitt (1.1) hat eine Dicke von 35%, der Anlassabschnitt (3) hat eine Dicke von 5%, der Randabschnitt (2) hat eine Dicke von 60%, wovon für die Randschicht (4) eine Dicke von maximal 5% entfallen kann, bezogen auf die Gesamtdicke (D) des Flachproduktes (1'), Figur 6a). Das asymmetrische Härteprofil über die Dicke (D) ist in Figur 6b) dargestellt.

Die Auslegung der Abschnitte mit unterschiedlichen Härten ist nicht auf die gezeigten Ausführungsbeispiele beschränkt.

### Bezugszeichenliste

- 1: Flachprodukt
- 1': wärmebehandeltes Flachprodukt
- 1.1: Abschnitt, Kernschicht
- 1.2: Gefüge mit einer ersten Härte
- 2, 2': Randabschnitt
- 2.1, 2'.1: austenitisierter, erwärmter, zu härtender Bereich
- 2.2, 2'.2: Gefüge mit einer zweiten Härte
- 3, 3': Anlassabschnitt
- 3.2, 3'.2: Gefüge mit einer vierten Härte
- 4, 4': entkohlte Randschicht, Randschicht
- 4.2, 4'.2: Gefüge mit einer fünften Härte
- B, B': Abkühlbrause
- D: Dicke, Gesamtdicke
- I, I': Induktor
- W, W': Wärmebehandlungseinheit

## Patentansprüche

1. Verwendung eines wärmebehandelten Flachproduktes (1') aus Stahl, welches optional zu einem Endprodukt umgeformt und/oder beschnitten ist, als Teil oder Komponente einer Panzerung oder als Teil oder Komponente mit Verschleißschutz-Eigenschaften, insbesondere gegen Einwirkung von abrasiven Kräften, wobei innerhalb des Flachproduktes (1') ein Gefüge mit einer zweiten Härte (2.2) abschnittsweise über die Dicke (D) des Flachproduktes (1') ausgebildet ist und zumindest in einem Abschnitt (1.1) über die Dicke (D) des Flachproduktes (1') ein Gefüge mit einer ersten Härte (1.2) ausgebildet ist, wobei das Gefüge mit der zweiten Härte (2.2) eine im Vergleich zu dem Gefüge mit der ersten Härte (1.2) höhere Härte aufweist und wärmebehandelt ist, wobei das Gefüge mit der zweiten Härte (2.2) in mindestens einem Randabschnitt (2) des Flachprodukts (1') ausgebildet ist,
**dadurch gekennzeichnet, dass**
das Flachprodukt (1') zumindest zwischen einem Randabschnitt (2, 2') mit dem Gefüge mit der zweiten Härte (2.2, 2'.2) und dem Abschnitt (1.1) mit dem Gefüge mit der ersten Härte (1.2) einen Anlassabschnitt (3, 3') mit einem Gefüge mit einer vierten Härte (3.2, 3'.2) aufweist, welcher eine im Vergleich zum Abschnitt (1.1) mit dem Gefüge mit der ersten Härte (1.2) um mindestens 10 HV10 geringere Härte hat, wobei das Flachprodukt (1') zumindest in einem der Randabschnitte (2, 2') mit dem Gefüge mit der zweiten Härte (2.2, 2'.2) und/oder dritten Härte eine entkohlte Randschicht aufweist oder eine Randschicht (4, 4') mit einem Gefüge mit einer fünften Härte (4.2, 4'.2) aufweist, welche eine im Vergleich zum Randabschnitt (2, 2') mit dem Gefüge mit der zweiten Härte (2.2, 2'.2) und/oder dritten Härte geringere Härte hat.

2. Verwendung nach Anspruch 1,
**dadurch gekennzeichnet, dass**
das Gefüge mit der zweiten Härte (2.2) in einem Randabschnitt (2) des Flachprodukts (1') ausgebildet ist, wobei die Schichtdicke des Randabschnittes (2) mindestens 5% bis maximal 80% der Gesamtdicke (D) des Flachproduktes (1') betragen kann und die restliche Dicke der Gesamtdicke (D) des Flachproduktes (1') aus dem Abschnitt (1.1) mit dem Gefüge mit der ersten Härte (1.2) besteht.

3. Verwendung nach Anspruch 1,
**dadurch gekennzeichnet, dass**
das Gefüge mit der zweiter Härte (2.2, 2'.2) in beiden Randabschnitten (2, 2') des Flachprodukts (1') ausgebildet ist oder auf einer Seite des Flachproduktes (1') ein Randabschnitt (2) mit einem Gefüge mit einer zweiten Härte (2.2) und auf der anderen Seite des Flachproduktes (1') ein Randabschnitt (2') mit einem Gefüge mit einer dritten Härte ausgebildet sind, wobei das Gefüge mit der dritten Härte eine geringere Härte als das Gefüge mit der zweiten Härte (2.2, 2'.2) jedoch eine höhere Härte als das Gefüge mit der ersten Härte (1.2) aufweist, wobei die Schichtdicke des Randabschnittes (2, 2') jeweils zwischen mindestens 5% und maximal 45 % der Gesamtdicke (D) des Flachproduktes (1') variieren kann und die restliche Dicke durch den Abschnitt (1.2) mit dem Gefüge mit der ersten Härte (1.2) gebildet ist.

4. Verwendung nach einem der Ansprüche 1 bis 3,
**dadurch gekennzeichnet, dass**
das Flachprodukt (1') eine Härtedifferenz zwischen dem mindestens einen Randabschnitt (2, 2') mit dem Gefüge mit der zweiten Härte (2.2, 2'.2) und/oder dritten Härte und dem Abschnitt (1.1) mit dem Gefüge mit der ersten Härte (1.2) von mindestens 100 HV10 aufweist.

5. Verwendung nach einem der Ansprüche 1 bis 4,
**dadurch gekennzeichnet, dass**
das Flachprodukt (1') zumindest zwischen einem Randabschnitt (2, 2') mit dem Gefüge mit der dritten Härte und dem Abschnitt (1.1) mit dem Gefüge mit der ersten Härte (1.2) einen Anlassabschnitt (3, 3') mit einem Gefüge mit einer vierten Härte (3.2, 3'.2) aufweist, welcher eine im Vergleich zum Abschnitt (1.1) mit dem Gefüge mit der ersten Härte (1.2) um mindestens 10 HV10 geringere Härte hat.

6. Verwendung nach einem der Ansprüche 1 bis 5,
**dadurch gekennzeichnet, dass**
das Flachprodukt (1') eine Gesamtdicke zwischen 3 und 80 mm, insbesondere zwischen 6 und 20 mm hat.

## Claims

1. Use of a thermally treated flat steel product (1'), which is optionally formed and/or cut into an end product, as a part or a component of an armouring or as a part or a component with wear protection characteristics, in particular against the influence of abrasive forces, wherein, within the flat product (1'), a structure with a second hardness (2.2) is formed in sections across the thickness (D) of the flat product (1') and, at least in one section (1.1), a structure with a first hardness (1.2) is formed across the thickness (D) of the flat product (1'), wherein the structure with the second hardness (2.2) has a higher level of hardness in comparison with the structure with the first hardness (1.2) and is thermally treated, wherein the structure with the second hardness (2.2) is formed in at least one surface section (2) of the flat product (1'), **characterized in that** at least between a surface section (2, 2') with the structure with the second hardness (2.2, 2'.2) and the section (1.1) with the structure with the first hardness (1.2), the flat product (1') comprises an annealing section (3, 3') with a structure with a fourth hardness (3.2, 3'.2), which has at least a 10 HV10 lower level of hardness in comparison with the section (1.1) with the structure with the first hardness (1.2), wherein, at least in one of the surface sections (2, 2') with the structure with the second hardness (2.2, 2'.2) and/or third hardness, the flat product (1') comprises a decarburized surface layer or a surface layer (4, 4') with a structure with a fifth hardness (4.2, 4'.2), which has a lower level of hardness in comparison with the surface section (2, 2') with the structure with the second hardness (2.2, 2'.2) and/or third hardness.

2. Use according to Claim 1, **characterized in that** the structure with the second hardness (2.2) is formed in a surface section (2) of the flat product (1'), wherein the layer thickness of the surface section (2) can be at least 5% up to a maximum of 80% of the total thickness (D) of the flat product (1'), and the remaining thickness of the total thickness (D) of the flat product (1') consists of the section (1.1) with the structure with the first hardness (1.2).

3. Use according to Claim 1, **characterized in that** the structure with the second hardness (2.2, 2'.2) is formed within both surface sections (2, 2') of the flat product (1') or a surface section (2) with a structure with a second hardness (2.2) is formed on one side of the flat product (1') and a surface section (2') with a structure with a third hardness is formed on the other side of the flat product (1'), wherein the structure with the third hardness has a lower level of hardness than the structure with the second hardness (2.2, 2'.2), however a higher level of hardness than the structure with the first hardness (1.2), wherein the layer thickness of the surface section (2, 2') can vary between at least 5% and a maximum of 45% of the total thickness (D) of the flat product (1') respectively, and the remaining thickness is formed by the section (1.2) with the structure with the first hardness (1.2).

4. Use according to one of Claims 1 to 3, **characterized in that** the flat product (1') has a hardness difference of at least 100 HV10 between the at least one surface section (2, 2') with the structure with the second hardness (2.2, 2'.2) and/or third hardness and the section (1.1) with the structure with the first hardness (1.2).

5. Use to one of Claims 1 to 4, **characterized in that**, at least between a surface section (2, 2') with the structure with the third hardness and the section (1.1) with the structure with the first hardness (1.2), the flat product (1') comprises an annealing section (3, 3') with a structure with a fourth hardness (3.2, 3'.2), which has at least a 10 HV10 lower level of hardness in comparison with the section (1.1) with the structure with the first hardness (1.2).

6. Use to one of Claims 1 to 5, **characterized in that**, the flat product (1') has a total thickness between 3 and 80 mm, in particular between 6 and 20 mm.

## Revendications

1. Utilisation d'un produit plat (1') en acier traité thermiquement, qui est éventuellement mis en forme et/ou découpé pour donner un produit final, comme partie ou composant d'un blindage ou comme partie ou composant ayant des propriétés anti-usure, en particulier contre l'action de forces abrasives, une structure ayant une deuxième dureté (2.2) étant formée à l'intérieur du produit plat (1') par portions sur l'épaisseur (D) du produit plat (1') et une structure ayant une première dureté (1.2) étant formée au moins dans une portion (1.1) sur l'épaisseur (D) du produit plat (1'), la structure ayant la deuxième dureté (2.2) ayant une dureté supérieure à celle de la structure ayant la première dureté (1.2) et étant traitée thermiquement, la structure ayant la deuxième dureté (2.2) étant formée dans au moins une portion de bord (2) du produit plat (1'), **caractérisée en ce que** le produit plat (1') comporte, au moins entre une portion de bord (2, 2') pourvue de la structure ayant la deuxième dureté (2.2, 2'.2) et la portion (1.1) pourvue de la structure ayant la première dureté (1.2), une portion de recuit (3, 3') pourvue d'une structure ayant une quatrième dureté (3.2, 3'.2) qui a une dureté inférieure d'au moins 10 HV10 à celle de la portion (1.1) pourvue de la structure ayant la première dureté (1.2), le produit plat (1') comportant au moins dans l'une des portions de bord (2, 2') pourvues de la structure ayant la deuxième dureté (2.2, 2'.2) et/ou la troisième dureté une couche de bord décarburée ou une couche de bord (4, 4') pourvue d'une structure ayant une cinquième dureté (4.2, 4'.2) qui a une dureté inférieure à celle de la portion de bord (2, 2') pourvue de la structure ayant la deuxième dureté (2.2, 2'.2) et/ou la troisième dureté.

2. Utilisation selon la revendication 1, **caractérisée en ce que** la structure ayant la deuxième dureté (2.2) est formée dans une portion de bord (2) du produit plat (1'), l'épaisseur de couche de la portion de bord (2) pouvant représenter au moins 5 % et jusqu'à maximum 80 % de l'épaisseur totale (D) du produit plat (1') et l'épaisseur restante de l'épaisseur totale (D) du produit plat (1') comprenant la portion (1.1) pourvue de la structure ayant la première dureté (1.2).

3. Utilisation selon la revendication 1, **caractérisée en ce que** la structure ayant la deuxième dureté (2.2, 2'.2) est formée dans les deux portions de bord (2, 2') du produit plat (1') ou une portion de bord (2) pourvue d'une structure ayant une deuxième dureté (2.2) est formée sur un côté du produit plat (1') et une portion de bord (2') pourvue d'une structure ayant une troisième dureté est formée de l'autre côté du produit plat (1'), la structure ayant la troisième dureté ayant une dureté inférieure à celle de la structure ayant la deuxième dureté (2.2, 2'.2) mais une dureté supérieure à celle de la structure ayant la première dureté (1.2), l'épaisseur de couche de la portion de bord (2, 2') pouvant varier entre au moins 5 % et au maximum 45 % de l'épaisseur totale (D) du produit plat (1') et l'épaisseur restante étant formée par la portion (1.2) pourvue de la structure ayant la première dureté (1.2).

4. Utilisation selon l'une des revendications 1 à 3, **caractérisée en ce que** le produit plat (1') présente une différence de dureté d'au moins 100 HV10 entre l'au moins une portion de bord (2, 2') pourvue de la structure ayant la deuxième dureté (2.2, 2'.2) et/ou la troisième dureté et la portion (1.1) pourvue de la structure ayant la première dureté (1.2).

5. Utilisation selon l'une des revendications 1 à 4, **caractérisée en ce que** le produit plat (1') comporte, au moins entre une portion de bord (2, 2') pourvue de la structure ayant la troisième dureté et la portion (1.1) pourvue de la structure ayant la première dureté (1.2), une portion de recuit (3, 3') pourvue d'une structure ayant une quatrième dureté (3.2, 3'.2) qui a une dureté inférieure d'au moins 10 HV10 à celle de la portion (1.1) pourvue de la structure ayant la première dureté (1.2).

6. Utilisation selon l'une des revendications 1 à 5, **caractérisée en ce que** le produit plat (1') a une épaisseur totale comprise entre 3 et 80 mm, en particulier entre 6 et 20 mm.
